# EUROPÄISCHE PATENTSCHRIFT

(11) **EP 0 436 256 B1**
(45) Veröffentlichungstag und Bekanntmachung des Hinweises auf die Patenterteilung: **27.07.1994**
(21) Anmeldenummer: 90250294.7
(22) Anmeldetag: 28.11.1990
(51) Int. Cl.: H02B 13/035

(54) **Lastschaltanlage mit isoliergasgefülltem Behälter und Mehrstellungs-Drehschalter**
Switchgear with a gas-filled container and multi-position rotary switch
Installation de commutation avec un récipient blindé à isolation gazeuse et interrupteur rotatif multiposition

(30) Priorität: 04.01.1990 DE 4000258
(43) Veröffentlichungstag der Anmeldung: 10.07.1991
(73) Patentinhaber: SIEMENS AKTIENGESELLSCHAFT, 80333 München (DE)
(72) Erfinder: Späck, Helmut, W-6050 Offenbach (DE)

(56) Entgegenhaltungen:
- EP-A- 0 059 255
- DE-A- 2 847 376
- SIEMENS POWER ENGINEERING Bd. 5, Nr. 3, Mai 1983, PASSAU DEUTSCHLAND REINHARD BUCHENAU ET AL.: 'NEW 8DJ10 MEDIUM-VOLTAGE LOAD-BREAK SWITCHGEAR FOR 6 TO 24 KV, MAINTENANCE-FREE AND CLIMATE-PROOF'

## Beschreibung

Die Erfindung betrifft eine Lastschaltanlage mit einem isoliergasgefüllten Behälter und wenigstens zwei darin angeordneten Mehrstellungs-Drehschaltern, deren Antriebe an der Außenseite des Behälters angebracht sind und die mittels gasdichter Durchführungen mit den Schaltorganen der Drehschalter zusammenwirken, und ferner mit Durchführungen für Kabelleiter.

Eine Lastschaltanlage dieser Art, wie sie beispielsweise als Ringkabel-Schaltstation in der Mittelspannungs-Energieverteilung eingesetzt werden kann, ist durch die DE-C-31 07 911 bekannt geworden. Da sich Schaltanlagen dieser Art aufgrund ihrer hohen dielektrischen Zuverlässigkeit und ihres nur geringen Wartungsbedarfes bewährt haben, besteht der Wunsch, bei im wesentlichen gleicher Wirkungsweise und unter Verwendung bereits erprobter Bauteile eine Lastschaltanlage mit weiter verringertem Raumbedarf zu schaffen.

Diese Aufgabe wird gemäß der Erfindung durch folgende Merkmale gelöst:
a) die Mehrstellungs-Drehschalter sind mit vertikaler Drehachse angeordnete,
b) die Anschlußstücke aller Mehrstellungs-Drehschalter sind zur Vorderwand bzw. zur Rückwand des Behälter weisend angeordnet und
c) Antriebsvorrichtungen der Drehschalter sind an der Oberseite des Behälters angeordnet.

Es erweist sich, daß eine Lastschaltanlage nach der Erfindung mit einem gegenüber dem bisherigen kesselartigen Aufbau überraschend verringerten Volumen herstellbar ist. Dies verringert die Kosten für die Lastschaltanlage nicht nur dadurch, daß der zu ihrer Aufstellung benötigte Raum verringert wird, sondern verringert auch den Materialaufwand für ihre Herstellung.

Die Abmessungen des Behälters können noch dadurch günstig beeinflußt werden, daß Verbindungsbrücken für die Erdungsfunktion der Mehrstellungs-Drehschaltern durch Abkröpfung gegenüber der Ebene der einander gegenüberliegenden Anschlußstücke benachbarter Mehrstellungs-Drehschalter ohne Vergrößerung des Abstandes der benachbarten Drehschalter verschachtelt angeordnet sind.

Die für den Anschluß von Kabeln vorgesehenen Durchführungen können an der Unterseite des Behälters angeordnet sein. Für Prüfzwecke und zur Erdung vorgesehene weitere Durchführungen können an der Frontseite des Behälters angebracht sein. Diese Behälterseite steht zur Verfügung, da die Antriebsvorrichtung oben und die Kabeldurchführungen unten am Behälter angebracht sind. Somit befinden sich alle wesentlichen Bedienungselemente an der Frontseite der Lastschaltanlage bzw. sind von dieser Seite her zugänglich.

Lastschaltanlagen können bekanntlich Schmelzsicheungen in der Bauform von standardisierten HH-Sicherungen als Schutz gegen Kurzschlüsse zugeordnet sein. Bei einer Lastschaltanlage nach der Erfindung kann dies in vorteilhafter Weise dadurch geschehen, daß die Sicherungen an einer Seitenwand des Behälters mit horizontaler Längsachse angeordnet sind. Zum Auswechseln der HH-Sicherungen ist dann eine ähnliche Arbeitsweise anwendbar wie etwa bei einer Lastschaltanlage nach der erwähnten DE-C-31 07 911, bei der die Sicherungen in Gehäusen oberhalb des Behälters angebracht sind. Die Anordnung an einer Seitenwand des Behälters bringt jedoch die Sicherungen in eine für eine Bedienungsperson vorteilhaftere Position.

Die Erfindung wird im folgenden anhand des in den Figuren dargestellten Ausführungsbeispieles näher erläutert.

Die Figur 1 zeigt in einer Frontansicht eine Lastschaltanlage mit drei Mehrstellungs-Drehschaltern.

In der Figur 2 ist die Lastschaltanlage nach der Figur 1 in Draufsicht bzw. im Schnitt unterhalb der Antriebsvorrichtung dargestellt.

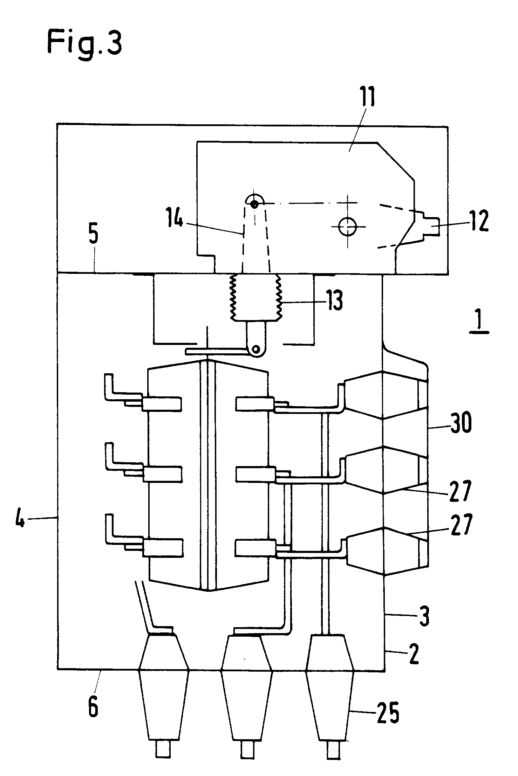

Die Figur 3 zeigt eine Seitenansicht in Schnittdarstellung ohne Sicherungsanbau gemäß den Figuren 1 und 2.

Die in den Figuren gezeigte Lastschaltanlage 1 weist einen quaderförmigen Behälter 2 auf, der in bekannter Weise aus rostfreiem Stahlblech hergestellt und nach Einbau der noch zu beschreibenden Komponenten durch Schweißen zugangslos verschlossen sein kann. Wird als Isoliergas in bekannter Weise Schwefelhexafluorid (SF₆) verwendet, so wird in dem hier vorzugsweise betrachteten Bereich der Mittelspannung, d. h. einem Spannungsbereich bis etwa 36 kV, nur ein verhältnismäßig geringer Überdruck des Isoliergases benötigt. Diesem geringen Überdruck können die Wände des Behälters 2 auch bei ebener Ausführung und verhältnismäßig geringer Dicke des Materials ohne Schaden standhalten. Jedoch ist es in bekannter Weise möglich, durch einzelne aufgeschweißte Verstärkungsteile, z. B. profilierte Blechstücke, die Festigkeit des Behälters 2 gegen inneren Überdruck angemessen zu erhöhen.

Um die Bezugnahme auf die Lage der Komponenten der Lastschaltanlage im folgenden näher erläutern zu können, sind die Vorderwand des Behälters 2 mit 3, die Rückwand mit 4, die Oberwand mit 5, die Unterwand mit 6 sowie die linke und die rechte Seitenwand mit 7 bzw. 8 bezeichnet.

In dem Behälter 2 sind drei Mehrstellungs-Drehschalter 10 mit vertikaler Drehachse angeordnet. Jeder der Drehschalter 10 besitzt eine Antriebsvorrichtung 11, die an der Oberwand 5 des Behälters 2 angebracht und so ausgebildet ist, daß die Bedienungs- und Anzeigeelemente - angedeutet ist insbesondere ein Betätigungshandgriff 12 - etwa in der Verlängerung der Vorderwand 3 des Behälters 2 oder über die Vorderwand 3 vorstehend zugänglich sind. Für das Zusammenwirken zwischen der Antriebsvorrichtung 11 und dem zugehörigen Drehschalter 10 ist in bekannter Weise ein Faltenbalg 13 als gasdichte mechanische Durchführung für einen Antriebshebel 14 vorgesehen.

In der gezeigten Ausführung mit drei Drehschaltern 10 eignet sich die Lastschaltanlage 1 vor allem als Ringschaltkombination, bei der zwei der Drehschalter 10 für die Ringkabel und der dritte Drehschalter 10 für einen Transformatorabgang vorgesehen sind. Als Kurzschlußschutz für einen solchen Transformator weist die Lastschaltanlage 1 drei HH-Sicherungen 15 auf, die an der linken Seitenwand 7 des Behälters 2 mit horizontaler Richtung ihrer Längsachse angeordnet sind. In bekannter Weise kann jede der HH-Sicherungen 15 in einem eigenen Gehäuse untergebracht sein, wobei die Verbindung der Sicherungskontakte mit den Leitern im Inneren des Behälters 2 über gasdichte Durchführungen in der Seitenwand 7 hergestellt ist. Die HH-Sicherungen 15 können auch in einem gemeinsamen Gehäuse untergebracht sein, das durch Zwischenwände unterteilt ist.

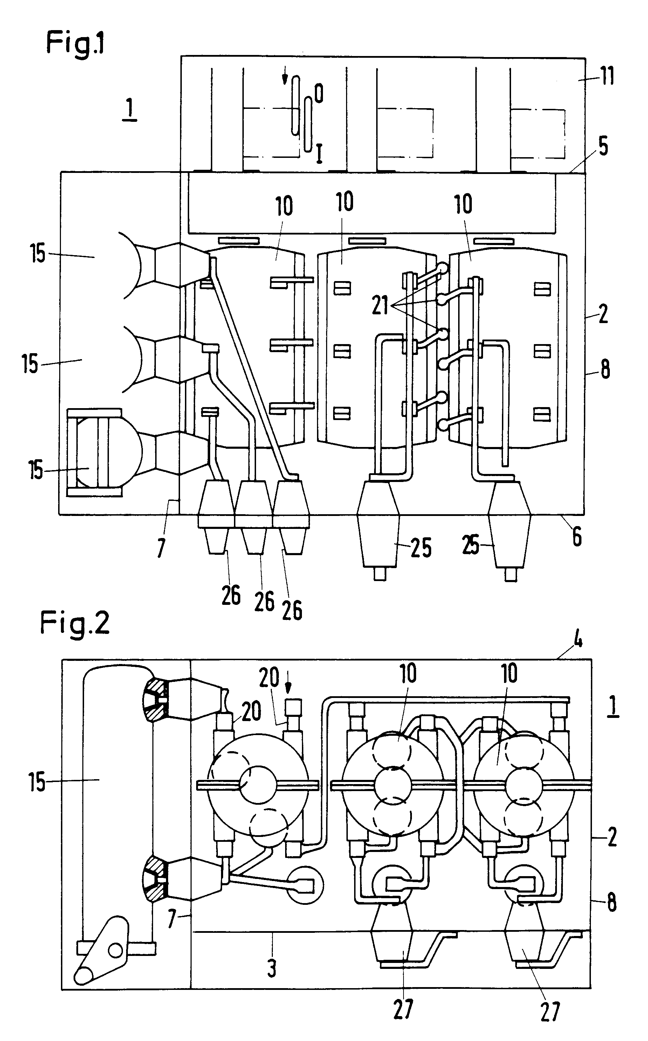

Zu den geringen Abmessungen des Behälters 2 trägt insbesondere bei, daß die Anschlußstücke 20 der Drehschalter 10 jeweils so angeordnet sind, daß sie zur Vorderwand 3 bzw. zur Rückwand 4 des Behälters 2 weisen. Hierdurch kann der Abstand zwischen benachbarten Drehschaltern 10 verhältnismäßig gering sein. Ferner sind die den verschiedenen Phasen zum Zweck der Erdung zugeordneten Verbindungsbrücken 21 gegenüber der Ebene der gegenüberliegenden Anschlußstücke 20 benachbarter Drehschalter 10 abgekröpft. Dadurch lassen sich wie insbesondere die Figur 1 erkennen läßt, trotz des geringen Abstandes insgesamt sechs Verbindungsbrücken 21 im Raum zwischen zwei benachbarten Drehschaltern 10 unterbringen.

An der Unterwand 6 des Behälters 2 befinden sich Durchführungen 25 für die Ringkabel sowie weitere Durchführungen 26 für einen Transformatoranschluß. Weitere Durchführungen 27 sind an der Vorderwand 3 des Behälters 2 vorgesehen. Hierbei handelt es sich um Prüf- oder Erdungsdurchführungen, deren Durchführungsleiter mit den für die Erdung dienenden Schaltkontakten der Drehschalter 10 in Verbindung stehen. Die äußeren Enden der Durchführungsleiter sind im normalen Betrieb der Lastschaltanlage 1 durch eine Erdungsschiene 30 verbunden, die mit dem Behälter 2 verbunden ist. Nach Entfernung der Erdungsschiene 30 stehen die Durchführungsleiter für Zwecke der Prüfung der angeschlossenen Kabel zur Verfügung.

In bekannter Weise kann der Behälter auf einem nicht dargestellten Untergestell in solcher Hohe aufgestellt sein, daß sowohl eine günstige Handhabung der Kabel beim Anschließen an die Durchführungen 25 und 26 als auch eine gute Zugänglichkeit der Bedienungsorgane an der Frontseite gewährleistet ist. Ferner kann eine schrankartige Verkleidung vorgesehen sein. Die Durchführungen sind dann erst nach dem Öffnen der Verkleidung oder nach Abnahme von Verkleidungsteilen zugänglich.

## Patentansprüche

1. Lastschaltanlage mit einem isoliergasgefüllten Behälter (2) und wenigstens zwei darin angeordneten Mehrstellungs-Drehschaltern (10), deren Antriebsvorrichtungen (11) an der Außenseite des Behälters (2) angebracht sind und die mittels gasdichter Durchführungen (13) mit den Schaltorganen der Drehschalter (10) zusammenwirken, ferner mit Durchführungen (25, 26) für Kabelleiter, **gekennzeichnet durch** folgende Merkmale:
a) die Mehrstellungs-Drehschalter (10) sind mit vertikaler Drehachse angeordnet,
b) die Anschlußstücke (20) aller vorhandener Mehrstellungs-Drehschalter (10) sind zur Vorderwand (3) bzw. zur Rückwand (4) des Behälters (2) weisend angeordnet und
c) die Antriebsvorichtungen (11) der Drehschalter (10) sind an der Oberseite (5) des Behälters (2) angeordnet.

2. Lastschaltanlage nach Anspruch 1, **dadurch gekennzeichnet,** daß Verbindungsbrücken (21) für die Erdungsfunktion der Mehrstellungs-Drehschalter (10) durch Abkröpfung gegenüber der Ebene einander gegenüberliegender Anschlußstücke benachbarter Mehrstellungs-Drehschalter (10) ohne Vergrößerung des Abstandes der benachbarten Drehschalter (10) verschachtelt angeordnet sind.

3. Lastschaltanlage nach Anspruch 1, **dadurch gekennzeichnet,** daß für den Anschluß von Kabeln vorgesehenen Durchführungen (25, 26) an der Unterseite (6) des Behälters (2) angeordnet sind.

4. Lastschaltanlage nach Anspruch 3, **dadurch gekennzeichnet**, daß für Prüfzwecke und zur Erdung vorgesehene weitere Durchführungen (27) an der Frontseite (3) des Behälters (2) angebracht sind.

5. Lastschaltanlage nach einem der vorangehenden Ansprüche, **dadurch gekennzeichnet,** daß Schmelzsicherungen (HH-Sicherungen 15) an einer Seitenwand (7) des Behälters (2) angeordnet und mittels Durchführungen mit Leitern im Inneren des Behälters (2) verbunden sind.

## Claims

1. Load switchgear with an insulating gas-filled container (2) and at least two multi-position rotary switches (10) arranged therein, whose drive devices (11) are fitted to the outside of the container (2) and cooperate by means of gastight ducts (13) with the switching elements of the rotary switches (10), furthermore with ducts (25, 26) for cable conductors, characterised by the following features:
a) the multi-position rotary switches (10) are arranged with vertical axes of rotation,
b) the connection parts of all the multi-position rotary switches (10) present are arranged pointing towards the front wall (3) and rear wall (4) of the container (2), and
c) the drive devices (11) of the rotary switches (10) are arranged on the upper side (5) of the container (2).

2. Load switchgear according to claim 1, characterised in that connecting bridges (21) for the earthing function of the multi-position rotary switches (10) are arranged emboxed in one another by way of a cranked arrangement relative to the plane of oppositely arranged connecting parts of adjacent multi-position rotary switches (10), without enlarging the distance between adjacent rotary switches (10).

3. Load switchgear according to claim 1, characterised in that ducts (25, 26) are provided on the underside (6) of the container (2) for the connection of cables.

4. Load switchgear according to claim 3, characterised in that further ducts (27) are provided on the front side (3) of the container (2) for test purposes and for earthing.

5. Load switchgear according to one of the preceding claims, characterised in that safety fuses (high voltage safety fuses 15) are arranged on a side wall (7) of the container (2) and are connected by means of ducts to conductors within the container (2).

## Revendications

1. Installation de distribution de puissance, comportant un récipient (2) empli de gaz d'isolation et au moins deux commutateurs tournants (10) à plusieurs positions, qui sont disposés dans celui-ci, dont les dispositifs d'entraînement (11) sont montés du côté extérieur du récipient (2) et qui coopèrent au moyen de traversées (13) étanches aux gaz avec les organes de changement de position des commutateurs tournants (10), comportant en outre des traversées (25, 26) pour des câbles conducteurs, remarquable par les caractéristiques suivantes :
a) les commutateurs tournants (10) à plusieurs positions sont disposés de telle sorte que leur axe de rotation soit vertical,
b) les bornes de branchement (20) de tous les commutateurs tournants (10) présents sont disposés en étant dirigées vers la paroi avant (3), ou vers la paroi arrière (4), du récipient (2), et
c) les dispositifs d'entraînements (11) du commutateur tournant (10) sont disposés du côté supérieur (5) du récipient (2).

2. Installation de distribution de puissance selon la revendication 1, caractérisé en ce que les ponts de connexion (21) destinés à la fonction de mise à la terre des commutateurs tournants (10), à plusieurs positions, sont disposés de façon emboîtée en étant coudés par rapport au plan de bornes de branchement, disposées les unes en face des autres, de commutateurs tournants (10) à plusieurs positions voisins, sans augmenter l'écart entre les commutateurs tournants (10) voisins.

3. Installation de distribution de puissance selon la revendication 1, caractérisé en ce que des traversées (25, 26) prévues pour le branchement de câbles sont ménagées du côté inférieur (6) du récipient (2).

4. Installation de distribution de puissance selon la revendication 3, caractérisé en ce que d'autres traversées (27) prévues pour des vérifications et pour la mise à la terre, sont ménagées du côté avant (3) du récipient (2).

5. Installation de distribution de puissance selon l'une des revendications précédentes, caractérisé en ce que des fusibles (fusibles HH 15) sont montés une paroi latérale (7) du récipient (2) et connectés, grâce à des traversées, à des conducteurs situés à l'intérieur du récipient (2).
